# EUROPÄISCHE PATENTSCHRIFT

(11) **EP 0 758 670 B1**
(45) Veröffentlichungstag und Bekanntmachung des Hinweises auf die Patenterteilung: **21.02.2001**
(21) Anmeldenummer: 96112493.0
(22) Anmeldetag: 02.08.1996
(51) Int. Cl.: C09C 1/00, C09D 7/12, C08K 3/18, C09C 1/22, C09C 1/28, C09C 1/02, C09C 1/04

(54) **Eisenhaltige Bismutvanadatpigmente**
Iron containing bismuth vanadate pigments
Pigments à base de vanadate de bismuth contenant du fer

(30) Priorität: 12.08.1995 DE 19529837
(43) Veröffentlichungstag der Anmeldung: 19.02.1997
(73) Patentinhaber: BASF AKTIENGESELLSCHAFT, 67056 Ludwigshafen (DE)
(72) Erfinder: Ochmann, Harald, Dr., 67125 Dannstadt-Schauernheim (DE); Reisacher, Hansulrich, Dr., 74343 Sachsenheim (DE); Knittel, Helmut, 71634 Ludwigsburg (DE); Mronga, Norbert, Dr., 69221 Dossenheim (DE); Etzrodt, Günter, Dr., 70180 Stuttgart (DE); Wienand, Henning, Dr., 68809 Neulussheim (DE)

(56) Entgegenhaltungen:
- EP-A- 0 441 101
- EP-A- 0 551 637
- EP-A- 0 640 566
- WO-A-92/11205

## Beschreibung

Die vorliegende Erfindung betrifft neue Bismutvanadatpigmente der allgemeinen Formel I

BiₓFe_{y}EᵥV_{(1-w)}P_{w}O_{z} I

in der die Variablen folgende Bedeutung haben:
- E: Calcium, Zink, Cer, Praseodym und/oder Silicium;
- x: 0,8 bis 1,2;
- y: > 0 bis 0,1, wenn v > 0 ist, und
≥ 0,035 bis 0,1, wenn v = 0 ist;
- v: ≥ 0 bis 0,2;
- w: > 0 bis 0,1;
- z: Zahl der Sauerstoffatome zur Erfüllung der Valenzerfordernisse der Kationen.

Weiterhin betrifft die Erfindung die Herstellung dieser Pigmente und ihre Verwendung zum Einfärben von Lacken, Druckfarben und Kunststoffen.

Bismutvanadat stellt ein interessantes nichttoxisches Gelbpigment insbesondere für die Einfärbung von Lacken und Kunststoffen dar.

Zur Verbesserung der Anwendungseigenschaften, vor allem der thermischen Stabilität und der Beständigkeit gegen Chemikalien, enthalten die Pigmente in der Regel Dotierungsmittel wie Erdalkalimetall-, Zink-, Aluminium-, Zirconium-, Molybdat-, Wolframat-, Phosphat- und Silikationen (EP-A-239 526, EP-A-441 101, EP-A-443 981, US-A-4 063 956, US-A-4 230 500, EP-A-492 244, EP-A-640 566, WO-A-92/11205 und WO-A-92/19539), oder sie werden nachträglich mit Schutzhüllen aus Silikaten, Phosphaten oder Metalloxiden versehen (DE-A-27 27 864, DE-A-31 35 281 und DE-A-40 37 878). In der WO-A-94/1497 wird ein Bismutvanadatpigment erwähnt, dessen Herstellung in Gegenwart von Eisennitrat erfolgte, das jedoch als trüb und farbschwach beschrieben wird.

Die bekannten Pigmente können jedoch die koloristischen und anwendungstechnischen Anforderungen nicht vollständig befriedigen. Insbesondere können mit ihnen keine brillanten rotstichig gelben Farbtöne erzielt werden.

Der Erfindung lag daher die Aufgabe zugrunde, Bismutvanadatpigmente für den rotstichig gelben Farbtonbereich bereitzustellen, die sich durch gute Eigenschaften auszeichnen und vorteilhaft für die genannten Anwendungszwecke eingesetzt werden können.

Demgemäß wurden die eingangs definierten Bismutvanadatpigmente gefunden.

Außerdem wurde ein Verfahren zur Herstellung dieser Pigmente durch Fällung aus einer wäßrigen bismuthaltigen Lösung mit einer wäßrigen vanadiumhaltigen Lösung gefunden, welches dadurch gekennzeichnet ist, daß man eine alkalische Vanadatlösung, die lösliches Phosphat enthält, unter Rühren
a) mit einer sauren Bismutsalzlösung, die lösliche Salze von Eisen und gewünschtenfalls Calcium, Zink, Cer, Praseodym und/ oder Silicium, enthält, versetzt, mit einer Base den pH-Wert der Mischung auf 3 bis 6,5 einstellt, den pH-Wert durch weitere Zugabe von Base während des Erhitzens auf bis zu 100°C konstant hält, bis er nicht mehr absinkt, dann die Mischung so lange bei dieser Temperatur rührt, bis der pH-Wert, der anfängt zu steigen, von sich aus konstant bleibt, anschließend das ausgefällte Pigment isoliert, salzfrei wäscht, trocknet und 0,5 bis 5 Stunden bei 200 bis 700°C tempert oder
b) zu einer sauren Bismutsalzlösung, die lösliche Salze von Eisen und gewünschtenfalls Calcium, Zink, Cer, Praseodym und/ oder Silicum enthält, gibt, mit einer Base den pH-Wert der Mischung auf 2 bis 5 einstellt, die Mischung 0,5 bis 2 Stunden bei diesem pH-Wert rührt, dann den pH-Wert auf 5 bis 8 erhöht und durch weitere Basenzugabe während des Erhitzens auf bis zu 100°C konstant hält, bis er nicht mehr absinkt, die Mischung anschließend so lange bei dieser Temperatur rührt, bis der pH-Wert von sich aus konstant bleibt, danach das ausgefällte Pigment isoliert, salzfrei wäscht, trocknet und 0,5 bis 5 Stunden bei 200 bis 700°C tempert.

Weiterhin wurde die Verwendung dieser Pigmente zur Einfärbung von Lacken, Druckfarben und Kunststoffen gefunden.

Die erfindungsgemäßen Bismutvanadtpigmente weisen die Zusammensetzung

BiₓFe_{y}EᵥV_{(1-w)}P_{w}O_{z} I

auf, wobei E Praseodym, Silicium oder insbesondere Cer, Calcium und/oder Zink oder Mischungen der genannten Metalle bedeutet und die weiteren Variablen folgende Bedeutung haben:
- x: in der Regel 0,8 bis 1,2, vorzugsweise 0,9 bis 1,1;
- y: für den Fall, daß v > 0 ist:
in der Regel > 0 bis 0,1, vorzugsweise 0,005 bis 0,07;
und für den Fall, daß v = 0 ist:
in der Regel 0,035 bis 0,1, vorzugsweise 0,04 bis 0,007;
- v: in der Regel ≥ 0 bis 0,2, vorzugsweise 0,01 bis 0,15;
- w: in der Regel > 0 bis 0,1, vorzugsweise > 0 bis 0,05;
- z: Zahl der Sauerstoffatome zur Erfüllung der Valenzerfordernisse der Kationen.

Besonders bevorzugt sind die Bismutvanadatpigmente I, die mit Eisen und Phosphor sowie Cer, Calcium oder Zink dotiert sind.

Die erfindungsgemäßen Bismutvanadatpigmente I stellen brillante Pigmente für den rotstichig gelben Farbtonbereich dar und zeichnen sich durch hervorragende Eigenschaften aus. Sie haben in der Regel Chroma-Werte C* von ≥ 85, Helligkeitswerte L* von ≥ 70 sowie Farbwinkel Hue von 78 bis 86°, vorzugsweise 80 bis 84°. a*-Werte (Rot- bzw. Grünanteil) liegen üblicherweise bei > 8, vorzugsweise > 10, und b*-Werte (Blau- bzw. Gelbanteil) im allgemeinen bei > 80, vorzugsweise > 85.

Die im CIELAB-System verwendeten Begriffe C*, L*, Hue, a* und b* sind hinlänglich aus der Literatur bekannt und z.B. in Hans G. Völz, Industrielle Farbprüfung, Verlag Chemie, Weinheim (1990) und R.W.G. Hunt, Measuring Colour, Ellis Horwood Limited, West Sussex (1987) beschrieben.

Die Herstellung der Bismutvanadatpigmente I kann vorteilhaft nach einer der Varianten des erfindungsgemäßen Verfahrens durch Fällen aus einer sauren Bismutsalzlösung, die lösliche Salze von Eisen und den gewünschten Dotierungsmitteln E enthält, mit einer alkalischen Vanadatlösung, die lösliches Phosphat enthält, erfolgen.

Bei der Verfahrensvariante a) geht man dabei zweckmäßigerweise wie folgt vor: Man gibt die Bismutsalzlösung unter Rühren zu der Vanadatlösung, stellt den pH-Wert der Mischung durch Zugabe einer Base auf einen Wert von in der Regel 3 bis 6,5 ein und hält ihn durch weitere Basenzugabe während des Erhitzens auf bis zu 100°C und nach Erreichen dieser Temperatur konstant (in der Regel auf 4,5 bis 5,5), bis er nicht mehr absinkt. Anschließend rührt man die Mischung so lange weiter bei dieser Temperatur, bis der pH-Wert, der anfängt zu steigen, von sich aus konstant bleibt (in der Regel 0,5 bis 5 h). Man isoliert das gefällte Pigment durch Filtration, Waschen und Trocknen und tempert es abschließend noch im allgemeinen 0,5 bis 5 h bei 200 bis 700°C, vorzugsweise 200 bis 500°C.

Die Variante a) eignet sich insbesondere zur Herstellung der besonders bevorzugten Bismutvanadatpigmente I, die als Dotierungsmittel E insbesondere Calcium und/oder Zink und gewünschtenfalls Silicium enthalten.

Bei der Verfahrensvariante b) geht man üblicherweise wie folgt vor: Man gibt die Vanadatlösung, die durch Zugabe von Alkalimetallperborat, z.B. NaBO₂ · 9H₂O₂ · 3H₂O, stabilisiert sein kann (üblicherweise 5 bis 50, bevorzugt 5 bis 20 mol-% Bor, bezogen auf Vanadium), unter Rühren zu der Bismutsalzlösung, stellt den pH-Wert der Mischung mit einer Base auf im allgemeinen 2 bis 5 ein und rührt die Mischung 0,5 bis 2 h bei diesem pH-Wert. Dann erhöht man den pH-Wert auf in der Regel 5 bis 8 und hält ihn durch weitere Basenzugabe während des Erhitzens auf bis zu 100°C und nach Erreichen dieser Temperatur konstant, bis er nicht mehr absinkt. Anschließend rührt man die Mischung wie bei a) so lange weiter bei dieser Temperatur, bis der pH-Wert, der anfängt zu steigen, von sich aus konstant bleibt, was ebenfalls im allgemeinen 0,5 bis 5 h dauert. Man isoliert das Pigment auf übliche Weise und schließt die bei Variante a) beschriebene Temperaturbehandlung an.

Die Variante b) kann vorteilhaft zur Herstellung aller erfindungsgemäßen Bismutvanadatpigmente I angewendet werden.

Als lösliche Ausgangsverbindungen für die Fällungsreaktion werden bei beiden Verfahrensvarianten vorteilhaft z.B. folgende Salze eingesetzt:
- Ammonium- und Alkalimetall-, insbesondere Kalium- und vor allem Natriumvanadat;
- Alkalimetallphosphate und -hydrogenphosphate, insbesondere Kalium- und Natriumphosphat, sowie Phosphorsäure;
- Bismutnitrat;
- Eisen(III)sulfat, -chlorid und vor allem -nitrat;
- Calcium-, Zink-, Cer- und Praseodymchlorid und vor allem -nitrat; Wasserglas sowie Hexafluorokieselsäure und deren Salze wie Zinkhexafluorosilikat;
- als Basen vor allem Alkalimetallhydroxide wie Kalium- und vor allem Natriumhydroxid.

Das Eisensalz und die Dotierungsmittel E müssen nicht in der Bismutsalzlösung gelöst vorliegen, man kann sie auch stufenweise der Reaktionsmischung zugeben. Diese Vorgehensweise ist besonders vorteilhaft für die Dotierung mit Silicium. Dabei ist es besonders günstig, der Reaktionsmischung weitere Silikatlösung zuzusetzen, nachdem sich der pH-Wert auf einen Wert von 7,5 bis 10 stabilisiert hat.

Gewünschtenfalls können die erfindungsgemäßen Bismutvanadatpigmente zu weiteren Verbesserung der thermischen Stabilität sowie der Beständigkeit gegen Chemikalien noch einer der oben genannten Stabilisierungsbehandlungen unterzogen werden (z.B. Beschichten mit Silikaten, Phosphaten oder Metalloxiden). In der Regel sind insbesondere die erfindungsgemäßen Bismutvanadatpigmente, die mit Silicium dotiert sind, auch ohne nachträgliche Beschichtung bereits ausreichend thermisch stabil und weisen eine Photochromie dE von ≤ 1 auf.

Die erfindungsgemäßen Pigmente eignen sich vorteilhaft zu Einfärben von Lacken, Druckfarben und Kunststoffen.

### Beispiele

### Herstellung und Beurteilung von erfindungsgemäßen Bismutvanadatpigmenten

Zur Beurteilung der koloristischen Eigenschaften der Pigmente im Lack wurden wie folgt zunächst Lackierungen hergestellt: Eine Mischung aus 20 g des jeweiligen Pigments und 80 g Alkyd-Melamin-Einbrennlack (45 Gew.-% Festkörperanteil) wurde mit 150 g Glaskugeln (3 mm Durchmesser) 60 min mit einem Skandexgerät geschüttelt, dann auf Aluminium-Q-Panels deckend appliziert (Spritzverfahren) und bei 130°C 30 min eingebrannt.

Die Messung der CIELAB-Werte erfolgte anschließend mit einem Zeiss-Spektralphotometer RFC16. Die in der Tabelle angegebenen Farbwerte (Helligkeit L*; Rot- bzw. Grünanteil a*; Blau- bzw. Gelbanteil b*; Farbwinkel Hue[°]; Chroma C*) beziehen sich auf die Normlichtart D65.

Zur Beurteilung der Photochromie wurden die Lackierungen jeweils zur Hälfte mit einer Blechblende abgedeckt und dann 3 h mit einem 1000 Watt-Flutlichtstrahler (Sylvania, 1000 W Halogenlampe, Code-Nr. 216259; 45 cm Belichtungsabstand) bestrahlt. Die dE-Werte wurden durch direkt anschließende, vergleichende Vermessung des belichteten und des unbelichteten Teils der Lackierungen mit dem o.g. Spektralphotometer ermittelt (Differenz der Mittelwerte aus jeweils drei Messungen).

### Beispiele 1 bis 5

Zu einer Mischung aus 196,5 ml wäßriger Natriumvanadatlösung mit einem Gehalt von 79,92 g Vanadin/l (≙ 15,7 g Vanadium), 500 ml Wasser und 2,30 g 85 gew.-%iger Phosphorsäure wurden unter Rühren in 40 min 621,7 g Bismutnitratlösung mit einem Gehalt von 11,05 Gew.-% Bismut (≙ 68,7 g Bismut) und 6 Gew.-% Salpetersäure, in der a g Eisennitrat (Fe(NO₃)₃ · 9H₂O), b g Calciumnitrat (Ca(NO₃)₂ · 4H₂O) und c g Zinknitrat (Zn(NO₃)₂ · 6H₂O) gelöst waren, gegeben.

Der pH-Wert der Mischung wurde dann mit 30 gew.-%iger Natronlauge in 1 h auf 4,5 und anschließend mit 5 gew.-%iger Natronlauge in 10 min auf 5 eingestellt.

Danach wurde die entstandene, hellbraune Suspension unter Einhaltung des pH-Wertes 5 durch weitere Zugabe von Natronlauge auf 95°C erhitzt. Nach ca. 1 h färbte sich die Suspension gelb, und der pH-Wert stieg auf 7,6. Die Suspension wurde bis zur pH-Konstanz bei 95°C gerührt.

Das Pigment wurde abfiltriert, salzfrei gewaschen, mit Wasser auf ein Volumen von 800 ml gebracht und dann auf 80°C erhitzt. Zu dieser Suspension wurde eine Lösung von 15,4 g Aluminiumnitrat (Al(NO₃)₃ · 9H₂O) in 100 ml Wasser gegeben, wobei der pH-Wert der Suspension durch Zugabe einer 10 gew.-%igen Sodalösung bei 7 gehalten wurde. Anschließend wurde eine Lösung von 8,3 g Calciumnitrat (Ca(NO₃)₂ · 6H₂O) in 100 ml H₂O gleichzeitig mit einer Lösung von 2,7 g 85 gew.-%iger Phosphorsäure in 100 ml zugegeben, wobei der pH-Wert der Suspension durch erneute Zugabe von Sodalösung bei 6,5 gehalten wurde.

Nach Abkühlen wurde das Pigment abfiltriert, salzfrei gewaschen, bei 110°C getrocknet und anschließend nach 30 min bei 400°C getempert.

Einzelheiten zu diesen Versuchen sowie die Ergebnisse der coloristischen Untersuchungen sind der folgenden Tabelle zu entnehmen.

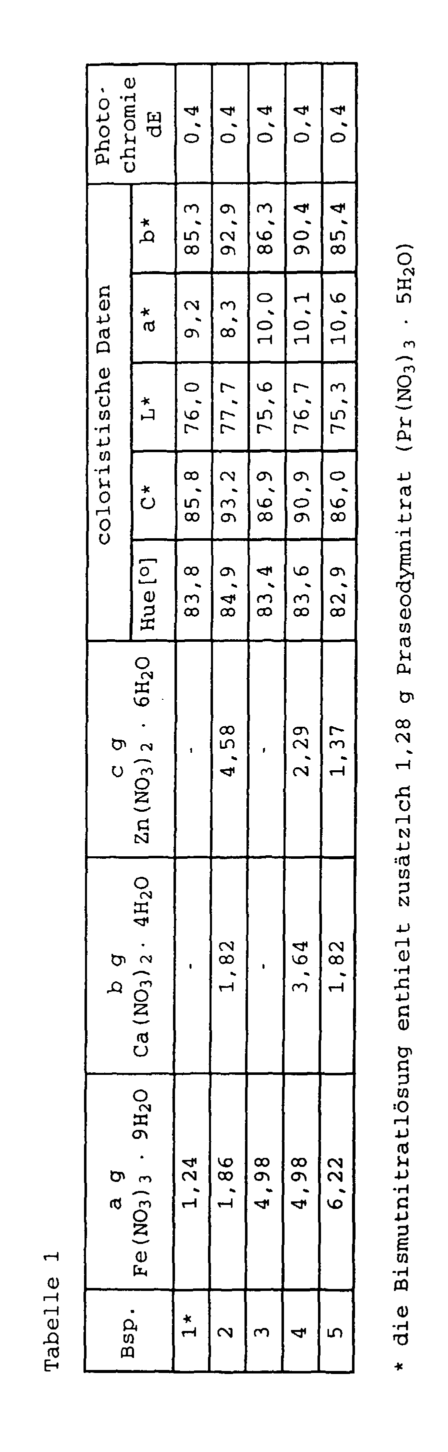

### Beispiel 6

Zu einer Mischung aus 621,7 g Bismutnitratlösung mit einem Gehalt von 11,05 Gew.-% Bismut (≙ 68,7 g Bismut) und 6 Gew.-% Salpetersäure, in der 1,24 g Eisennitrat (Fe(NO₃)₃ · 9H₂O) und 2,68 g Cernitrat (Ce(NO₃)₃ · 6H₂O) gelöst waren, wurden unter Rühren in 40 min 196,5 ml wäßriger Natriumvanadatlösung mit einem Gehalt von 79,92 g Vanadium/l (≙ 15,7 g Vanadium), 500 ml H₂O, 0,53 g 85 gew.-%ige Phosphorsäure und 0,71 g Natriumperborat (NaBO₂ · 9H₂O₂ · 3H₂O) gegeben.

Der pH-Wert der Mischung wurde dann mit 30 gew.-%iger Natronlauge in 1 h auf 3,5 und anschließend mit 5 gew.-%iger Natronlauge in 10 min auf 6 eingestellt.

Danach wurde die entstandene, hellbraune Suspension unter Einhaltung des pH-Wertes 6 durch weitere Zugabe von Natronlauge auf 99°C erhitzt. Nach ca. 1 h färbte sich die Suspension gelb, und der pH-Wert stieg auf 7,9. Die Suspension wurde bis zur pH-Konstanz bei 99°C gerührt.

Das Pigment wurde abfiltriert, salzfrei gewaschen, mit Wasser auf ein Volumen von 800 ml gebracht und dann auf 80°C erhitzt. Zu dieser Suspension wurde eine Lösung von 15,4 g Aluminiumnitrat (Al(NO₃)₃ · 9H₂O) in 100 ml Wasser gegeben, wobei der pH-Wert der Suspension durch Zugabe einer 10 gew.-%igen Sodalösung bei 7 gehalten wurde. Anschließend wurde eine Lösung von 8,3 g Calciumnitrat (Ca(NO₃)₂ · 6H₂O) in 100 ml H₂O gleichzeitig mit einer Lösung von 2,7 g 85 gew.-%iger Phosphorsäure in 100 ml zugegeben, wobei der pH-Wert der Suspension durch erneute Zugabe von Sodalösung bei 6,5 gehalten wurde.

Nach Abkühlen wurde das Pigment abfiltriert, salzfrei gewaschen, bei 110°C getrocknet und anschließend nach 30 min bei 310°C getempert.

Das erhaltene Pigment wies folgende coloristische Daten auf: Hue[°]: 80,7; C*: 89,2; L*: 72,2; a*: 14,3; b*: 88,0; dE: 0,4.

### Beispiel 7

Die Pigmentherstellung erfolgte analog Beispiel 6, jedoch enthielt die Bismutnitratlösung zusätzlich 6,18 g Natronwasserglas (28 Gew.-% SiO₂), das mit Wasser 1:10 verdünnt war.

Eine zusätzliche Pigmentstabilisierung wurde nicht vorgenommen. Das Pigment wurde nach dem Filtrieren und Waschen direkt bei 110°C getrocknet und 30 min bei 310°C getempert.

Das erhaltene Pigment wies folgende coloristische Daten auf: Hue[°]: 81,9; C*: 88,2: L*: 73,8; a*: 12,5; b*: 87,3; dE: 0,8.

## Patentansprüche

1. Bismutvanadatpigmente der allgemeinen Formel I
BiₓFe_{y}EᵥV_{(1-w)}P_{w}O_{z} I
in der die Variablen folgende Bedeutung haben:
E Calcium, Zink, Cer, Praseodym und/oder Silicium;
x 0,8 bis 1,2;
y > 0 bis 0,1, wenn v > 0 ist, und
≥ 0,035 bis 0,1, wenn v = 0 ist;
v ≥ 0 bis 0,2;
w > 0 bis 0,1;
z Zahl der Sauerstoffatome zur Erfüllung der Valenzerfordernisse der Kationen.

2. Bismutvanadatpigmente der Formel I nach Anspruch 1, in der E Zink, Calcium und/oder Cer bedeutet.

3. Bismutvanadatpigmente der Formel I nach Anspruch 1 oder 2, in der die Variablen folgende Bedeutung haben:
x 0,9 bis 1,1;
y 0,005 bis 0,07;
v 0,01 bis 0,15;
w > 0 bis 0,05;
z Zahl der Sauerstoffatome zur Erfüllung der Valenzerfordernisse der Kationen.

4. Verfahren zur Herstellung von Bismutvanadatpigmenten der Formel I gemäß Anspruch 1 durch Fällung aus einer wäßrigen bismuthaltigen Lösung mit einer wäßrigen vanadiumhaltigen Lösung, dadurch gekennzeichnet, daß man eine alkalische Vanadatlösung, die lösliches Phosphat enthält, unter Rühren
a) mit einer sauren Bismutsalzlösung, die lösliche Salze von Eisen und gewünschtenfalls Calcium, Zink, Cer, Praseodym und/oder Silicium enthält, versetzt, mit einer Base den pH-Wert der Mischung auf 3 bis 6,5 einstellt, den pH-Wert durch weitere Zugabe von Base während des Erhitzens auf bis zu 100°C konstant hält, bis er nicht mehr absinkt, dann die Mischung so lange bei dieser Temperatur rührt, bis der pH-Wert, der anfängt zu steigen, von sich aus konstant bleibt, anschließend das ausgefällte Pigment isoliert, salzfrei wäscht, trocknet und 0,5 bis 5 Stunden bei 200 bis 700°C tempert oder
b) zu einer sauren Bismutsalzlösung, die lösliche Salze von Eisen und gewünschtenfalls Calcium, Zink, Cer, Praseodym und/oder Silicium enthält, gibt, mit einer Base den pH-Wert der Mischung auf 2 bis 5 einstellt, die Mischung 0,5 bis 2 Stunden bei diesem pH-Wert rührt, dann den pH-Wert auf 5 bis 8 erhöht und durch weitere Basenzugabe während des Erhitzens auf bis zu 100°C konstant hält, bis er nicht mehr absinkt, die Mischung anschließend so lange bei dieser Temperatur rührt, bis der pH-Wert von sich aus konstant bleibt, danach das ausgefällte Pigment isoliert, salzfrei wäscht, trocknet und 0,5 bis 5 Stunden bei 200 bis 700°C tempert.

5. Verwendung von Bismutvanadatpigmenten der Formel I gemäß Anspruch 1 zur Einfärbung von Lacken, Druckfarben und Kunststoffen.

## Claims

1. Bismuth vanadate pigments of the general formula I
BiₓFe_{y}EᵥV_{(1-w)}P_{w}O_{z} I
where
E is calcium, zinc, cerium, praseodymium and/or silicon;
x is from 0.8 to 1.2;
y is > 0 to 0.1 when v is > 0 and
is ≥ 0.035 to 0.1 when v = 0;
v is ≥ 0 to 0.2;
w is > 0 to 0.1;
z is the number of oxygen atoms needed to satisfy the valence requirements of the cations.

2. Bismuth vanadate pigments as claimed in claim 1 of the formula I where E is zinc, calcium and/or cerium.

3. Bismuth vanadate pigments as claimed in claim 1 or 2 of the formula I where
x is from 0.9 to 1.1;
y is from 0.005 to 0.07;
v is from 0.01 to 0.15;
w is > 0 to 0.05;
z is the number of oxygen atoms needed to satisfy the valence requirements of the cations.

4. A process for preparing bismuth vanadate pigments of the formula I as set forth in claim 1 by precipitation from an aqueous bismuth-containing solution with an aqueous vanadium-containing solution, characterized in that an alkaline vanadate solution which contains soluble phosphate is with stirring
a) admixed with an acidic bismuth salt solution which contains soluble salts of iron and optionally calcium, zinc, cerium, praseodymium and/or silicon, the pH of the mixture is adjusted to 3-6.5 with a base, the pH is kept constant by continued addition of base during the heating to 100°C until the pH ceases to fall, then the mixture is stirred at 100°C until the pH, which starts to rise, stays constant without intervention, and subsequently' the precipitated pigment is isolated, washed salt-free, dried and heat-treated at from 200 to 700°C for from 0.5 to 5 hours, or
b) added to an acidic bismuth salt solution which contains soluble salts of iron and optionally calcium, zinc, cerium, praseodymium and/or silicon, the pH of the mixture is adjusted to 2-5 with a base, the mixture is stirred at a pH of 2-5 for from 0.5 to 2 hours, then the pH is raised to 5-8 and kept constant by continued base addition during the heating to 100°C until the pH ceases to fall, the mixture is subsequently stirred at 100°C until the pH stays constant without intervention, and thereafter the precipitated pigment is isolated, washed salt-free, dried and heat-treated at from 200 to 700°C for from 0.5 to 5 hours.

5. The use of bismuth vanadate pigments of the formula I as set forth in claim 1 for coloring paints, printing inks and plastics.

## Revendications

1. Pigments de vanadate de bismuth de formule générale I
BiₓFe_{y}EᵥV_{(1-w)}P_{w}O_{z} I
dans laquelle les variables prennent la signification suivante :
E représente un atome de calcium, de zinc, de cérium, de praséodyme et/ou de silicium;
x vaut de 0,8 à 1,2;
y est > 0 à 0,1 ; lorsque v > 0, et ≥ 0,035 à 0,1 ; lorsque v = 0;
v est ≥ 0 à 2;
w > 0 à 0,1;
z nombre d'atomes d'oxygène pour satisfaire les conditions de valence des cations.

2. Pigments de vanadate de bismuth de formule I selon la revendication 1, dans laquelle E représente un atome de zinc, de calcium et/ou de cérium.

3. Pigments de vanadate de bismuth de formule I selon la revendication 1 ou 2, dans laquelle les variables prennent la signification suivante :
x vaut de 0,9 à 1,1;
y vaut de 0,005 à 0,07;
v vaut de 0,01 à 0,15;
w > 0 à 0,05;
z représente le nombre d'atomes d'oxygène pour satisfaire les conditions de valence des cations.

4. Procédé de préparation de pigments de vanadate de bismuth de formule I selon la revendication 1 au moyen d'une précipitation d'une solution aqueuse contenant du bismuth avec une solution aqueuse contenant du vanadium, caractérisé en ce qu'une solution basique de vanadate, qui contient un phosphate soluble,
a) est mélangée, sous agitation, avec une solution acide de sel de bismuth, qui contient des sels solubles de fer et éventuellement de calcium, de zinc, de cérium, de praséodyme et/ou de silicium, l'on ajuste le pH du mélange à une valeur de 3 à 6,5 avec une base, on maintient la valeur du pH constante en ajoutant encore de la base pendant que l'on chauffe à jusqu'à 100°C, jusqu'à ce qu'elle ne chute plus, puis on agite le mélange à cette température jusqu'à ce que la valeur du pH, qui commence par augmenter, reste constante d'elle-même, ensuite on isole le pigment précipité, on le lave pour le débarrasser des sels, on le sèche et on l'étuve à une température de 200°C à 700°C pendant 0,5 à 5 heures, ou bien
b) est ajoutée sous agitation à une solution acide de sel de bismuth, qui contient des sels solubles de fer et éventuellement de calcium, de zinc, de cérium, de praséodyme et/ou de silicium, on ajuste le pH du mélange à une valeur de 2 à 5 avec une base, on agite le mélange pendant 0,5 à 2 heures à cette valeur de pH, puis on augmente la valeur du pH de 5 à 8 et on la maintient constante pendant que l'on chauffe à jusqu'à 100°C en ajoutant encore de la base, jusqu'à ce qu'elle ne chute plus, puis on agite le mélange à cette température jusqu'à ce que la valeur du pH reste constante d'elle-même, ensuite on isole le pigment précipité, on le lave pour le débarrasser des sels, on le sèche et on l'étuve à une température de 200°C à 700°C pendant 0,5 à 5 heures.

5. Utilisation de pigments de vanadate de bismuth de formule I selon la revendication 1 pour la coloration de laques, d'encres d'impression et de matières plastiques.
